# EUROPÄISCHE PATENTSCHRIFT

(11) **EP 0 611 955 B1**
(45) Veröffentlichungstag und Bekanntmachung des Hinweises auf die Patenterteilung: **12.01.2000**
(21) Anmeldenummer: 92112908.6
(22) Anmeldetag: 29.07.1992
(51) Int. Cl.: G01F 1/10, G01F 1/06, G01P 5/06, G01F 1/72, G01M 15/00, F02B 77/08

(54) **Einrichtung zur Untersuchung der Strömungsbewegung in zylindrischen Bauteilen**
Device for the examination of flow motion inside cylindrical components
Dispositif pour l'examen de l'écoulement d'un fluide dans des pièces cylindriques

(30) Priorität: 08.10.1991 DE 4133277
(43) Veröffentlichungstag der Anmeldung: 24.08.1994
(73) Patentinhaber: FEV Motorentechnik GmbH, 52078 Aachen (DE)
(72) Erfinder: Endres, Helmut, Dr.-Ing., W-5120 Herzogenrath (DE); Neusser, Heinz-Jakob, Dipl.-Ing., W-5100 Aachen (DE); Breuer, Michael, Dipl.-Ing., W-5107 Simmerath (DE)
(74) Vertreter: Langmaack, Jürgen, Dipl.-Ing.

(56) Entgegenhaltungen:
- EP-A- 0 038 020
- FR-A- 2 560 988

## Beschreibung

Die Erfindung bezieht sich auf eine Einrichtung entsprechend dem Oberbegriff des Anspruchs 1, zur Untersuchung der Strömungsbewegung in zylindrischen Bauteilen, wie sie insbesondere bei Hubkolbenmotoren eingesetzt wird, um die beim Einströmvorgang in den Zylinder erzeugte Ladungsbewequng zu analysieren .

Die bekannten Meßverfahren beziehen sich auf die Untersuchung von Drallströmungen, deren Drehachse parallel zur Zylinderachse liegt. Üblicherweise findet man diese Drallströmungen bei Hubkolbenmotoren mit einem Einlaßventil pro Zylinder. Bei diesen Motorkonzepten wird aufgrund der vielfach tangentialen Kanalanordnung diese Drallströmung beim Einströmen in den Zylinder während der Ansaugphase erzeugt.

Bei konventionellen Hubkolbenmotoren mit zwei Einlaßventilen pro Zylinder, die parallel zur Kurbelwellenachse angeordnet sind, wird wegen der symmetrisch aufgebauten Einlaßsysteme keine Drallströmung dieser Art erzeugt. Bei diesen Hubkolbenmotoren dominiert eine Strömungsform, deren Drehachse quer zur Zylinderachse angeordnet ist. Die Wirkungsweise dieser Strömungsbewequng auf die motorische Verbrennung unterscheidet sich grundlegend von der der Drallströmung.

Bei der Drallströmung bewirken die rotatorischen Geschwindigkeitskomponenten, die in idealisierter Vorstellung nach der Drallerhaltung während der Kompressionsphase konstant sind, eine Wirbelstabilisierung. Bei Strömungsformen mit Drehachse senkrecht zur Zylinderachse erfolgt dagegen durch die Kolbenbewequng ein Zerfall des Hauptwirbels in immer kleinere Partialwirbel. Dieser Zerfallprozeß transformiert Rotationsenergie in zusätzliche Turbulenz, wodurch bei diesen Strömungsformen hohe Turbulenzenergie entsteht.

Die unterschiedlichen Ladungsbewegungsformen wirken sich aus auf die Verbrennung, indem sie die Flammengeschwindigkeit als Summe der Brenn- und Transportgeschwindigkei beeinflussen. Intensive Strömungen mit Drehachse senkrecht zur Zylinderachse führen durch die starke Erhöhung der Turbulenz während der Kompressionsphase, die eine deutliche Auffächerung der Flammenoberfläche zur Folge hat, zu einer Zunahme der turbulenten Brenngeschwindigkeit.

Die Turbulentproduktion ist bei Drallströmungen, also bei Strömungen, deren Drehachse parallel zur Zylinderachse liegt, infolge des geringeren Wirbelzerfalls weniger stark ausgeprägt. Die daraus resultierende niedrige turbulente Brenngeschwindigkeit wird hier allerdings durch eine stärkere Transportbewegung unterstützt, die unmittelbar nach Einleiten der Zündung bei fremdgezündeten Hubkolbenmotoren zu einem schnellen Anwachsen des Flammkerns führt.

Obwohl beide Strömungsformen, also Drallströmungen mit Drehachse parallel zur Zylinderachse und Wirbel mit Drehachse senkrecht zur Zylinderachse, zu einer schnellen Verbrennung führen, sind die Wirkungsmechanismen vollkommen verschieden.

Der Erfindung liegt die Aufgabe zugrunde, eine Einrichtung zu schaffen, mit der Wirbelströmungen, deren Drehachse senkrecht zur Zylinderachse angeordnet sind, in konstruktiv günstiger und meßtechnisch sicherer Weise unmittelbar in einem zylindrischen Bauteil erfaßt und analysiert werden können.

Diese Aufgabe wird gemäß der Erfindung gelöst mit den im Kennzeichnungsteil des Anspruchs 1 angegebenen Mitteln.

Gemäß einer bevorzugten Ausführungsform ist vorgesehen, daß das zylindrische Bauteil in seiner axialen Richtung in Strömungsrichtung gesehen hinter dem Meßflügel bzw. hinter den Meßflügeln verschlossen ist und das in den zylindrischen Bauteil eintretende Strömungsmedium durch wenigstens eine Öffnung in der Wandung des zylindrischen Bauteils austreten kann, deren Mittelpunkt bzw. deren Mittelpunkte im wesentlichen mit der Drehachse des Meßflügels bzw. den Drehachsen der Meßflügel zusammenfällt bzw. zusammenfallen.

Gemäß einer weiteren bevorzugten Ausführungsform ist vorgesehen, daß das in das zylindrische Bauteil eintretende Strömungsmedium durch eine in Strömungsrichtung gesehen hinter dem Meßflügel bzw. hinter den Meßflügeln angeordnete strömungsdurchlässige Wandung ausströmen kann.

Besondere meßtechnische Vorteile sind erreichbar, wenn die Achse des Meßflügels bzw. der Meßflügel gegenüber dem strömungsführenden System in axialer Richtung des zylindrischen Bauteils verschiebbar und um die Achse des zylinderischen Bauteils drehbar ist.

Das zylindrische Bauteil kann in zweckmäßiger Weise in seiner axialen Richtung in Strömungsrichtung gesehen hinter dem Meßflügel bzw. hinter den Meßflügeln durch eine in der axialen Richtung des Bauteils verschiebbare, strömungsundurchlässige Wandung abgeschlossen sein.

Auch kann es vorteilhaft sein, daß die in Strömungsrichtung gesehen hinter dem Meßflügel bzw. hinter den Meßflügeln angeordnete strömungsdurchlässige Wandung in axialer Richtung des zylindrischen Bauteils verschiebbar ist.

Gemäß einer weiteren bevorzugten Ausführungsform ist vorgesehen, daß der Meßflügel bzw. die Meßflügel die Form eines Kreisringes hat bzw. haben.

Auch können mehrere zur Messung von Parametern der Strömungsbewegung geeignete Einrichtungen kombinatorisch zusammenwirkend angeordnet sein, und der Druck in dem zylindrischen Bauteil kann kleiner sein als in Strömungsrichtung gesehen der Druck vor dem die Strömungsbewegung erzeugenden strömungsführenden System.

Weitere meßtechnische Vorteile können erreicht werden, wenn das zylindrische Bauteil stationär oder instationär durchströmt wird.

Ausführungsbeispiele der Erfindung werden nachfolgend anhand der Zeichnungen beschrieben.

Fig. 1 zeigt eine erste Ausführungsform zur Bestimmung der Bewegung des Strömungsmediums senkrecht zur Achse des Zylinders einer Hubkolben-Brennkraftmaschine.

Fig. 2 zeigt eine zweite Ausführungsform.

Fig. 3 zeigt eine weitere Ausführungsform.

Die dargestellten Einrichtungen dienen der Simulation und der Untersuchung der Strömungsbewegung in zylindrischen Bauteilen von Hubkolben-Brennkraftmaschinen, also vor allem in den Zylindern, in denen die Verbrennung des Brennstoff/Luft-Gemisches erfolgt. Es soll dabei die Ladungsbewegung senkrecht zur Zylinderachse 1 untersucht werden.

Diesem Zweck dient ein zylindrisches Bauteil 2, dessen Innendurchmesser dem Innendurchmesser eines Zylinders einer Brennkraftmaschine entspricht, deren Eigenschaften zu untersuchen sind. Am oberen Teil, also in Strömungsrichtung vor dem zylindrischen Bauteil 2, sind die strömungsführenden Teile des Hubkolbenmotors angeordnet, insbesondere Einlaßkanäle 3 und Ventile 4, deren Hub entsprechend der Arbeitsweise des Hubkolbenmotors eingestellt wird. Als Verschluß des zylindrischen Bauteils 2 in axialer Richtung dient ein Kolben 5, der in radialer Richtung entsprechend den Betriebsbedingungen des zu untersuchenden Motors gegenüber dem (nicht dargestellten) Zylinderkopf passend angeordnet ist. In axialer Richtung wird die Position des Kolbens 5 entsprechend der tatsächlichen Zuordnung zum Ventilhub während der Ansaugphase eingestellt.

Etwa in gleichem Abstand zwischen dem Zylinderkopf und dem Kolben 5 befindet sich ein Meßflügel 7, der um seine Achse 6 drehbar ist. Die Achse 6 des Meßflügels 7 ist senkrecht zur Zylinderachse 1 angeordnet. Durch ein extern erzeugtes Druckgefälle angetrieben strömt Luft stationär durch die Einlaßkanäle 3 in das zylindrische Bauteil 2 ein, und sie kann aus dem zylindrischen Bauteil 2 über Öffnungen 8 in der Wandung des zylindrischen Bauteils 2 abströmen. Dadurch wird der Meßflügel 7, der vorzugsweise die Form eines Kreisrings hat, in Drehung versetzt. Die Luft verläßt das zylindrische Bauteil 2 in Richtung der Achse 6 des Meßflügels 7 durch die Öffnungen 8.

Die Achse bzw. Welle 6 des Meßflügels 7 ist mit einer Einrichtung 20 zur Auswertung der Drehfrequenz und/oder der Winkelstellung des Meßflügels 7 zur Bestimmung eines oder mehrerer Parameter der Strömungsbewegung in dem zylindrischen Bauteil 2 verbunden.

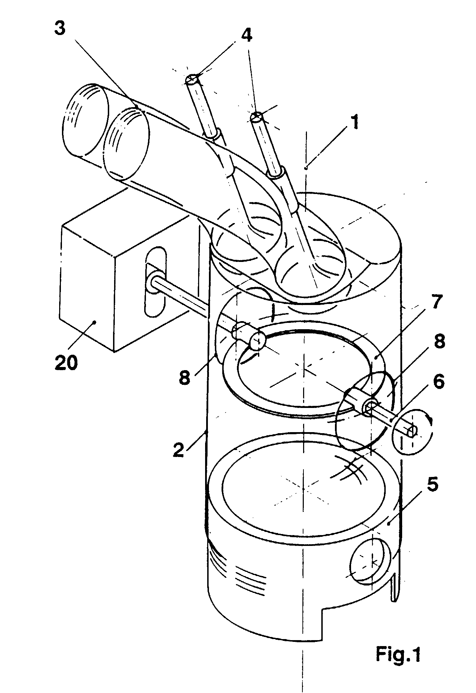

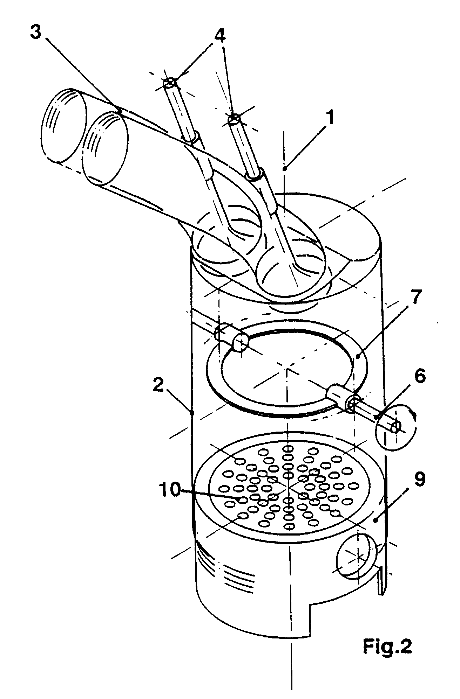

Die in Fig. 2 dargestellte Ausführungsform unterscheidet sich von der Ausführungsform nach Fig. 1 dadurch, daß Kolben 9 strömungsdurchlässig ist. Zu diesem Zweck können beispielsweise Bohrungen 10 in dem Boden des Kolbens 9 vorhanden sein. Hierdurch ergeben sich im Vergleich zu der Ausführungsform nach Fig. 1 andere Ausströmverhältnisse aus dem zylindrischen Bauteil 2.

Bei beiden Ausführungsformen ist zur Untersuchung der Strömungsbewegung in einem zylindrischen Rohr, die von in Strömungsrichtung gesehen vor dem zylindrischen Rohr befindlichen strömungsführenden Bauteilen, also im wesentlichen den Teilen 3 und 4, erzeugt wird, mindestens ein Meßflügel in diesem zylindrischen Rohr drehbar gelagert, dessen Drehachse die Achse des zylindrischen Rohres unter einem einstellbaren Winkel schneidet, und der von O° verschieden ist.

Mit einem derartigen Meßsystem können die strömungstechnischen Vorgänge im Zylinder von Hubkolbenmotoren auf einfache Weise nachgebildet und für das Brennverfahren wichtige Strömungscharakteristiken detailliert beobachtet werden.

Zur Bestimmung der Wirbelstärke in Bezug auf eine beliebig im zylindrischen Rohr orientierte Bezugsachse wird die Flügelachse entsprechend ausgerichtet und die Flügeldrehzahl gemessen. Hierbei wird bei der Ausführungsform nach Fig. 1 durch die Öffnungen 8 in der Zylinderwand, deren Mittelpunkte mit der Drehachse 6 des Meßflügels 7 im wesentlichen zusammenfallen, sichergestellt, daß der gesamte Massenstrom und damit auch der Drehimpulsanteil der strömungsbewegung bezüglich der Wirbelachse durch den Meßflügel 7 erfaßt wird.

Die Meßflügelgeometrie wird so gewählt, daß nur die zur Drehachse 6 tangentialen Geschwindigkeitsanteile die Flügeldrehzahl beeinflussen. Hierdurch wird sichergestellt, daß die gemessene Drehzahl proportional zum gesamten Drehimpuls der Strömung bezogen auf die Drehachse des Meßflügels 7 ist und damit die Übertragbarkeit auf die Verhältnisse im Motorbetrieb gewährleistet ist. Die Flügelanordnung unmittelbar im Zylinderrohr ist von besonderer Bedeutung, da hierdurch die Wirbelkomponenten direkt gemessen werden und die Bestimmung des für eine energetische Betrachtung erforderlichen tatsächlichen Geschwindigkeitsniveaus der Wirbelströmung ermöglicht wird.

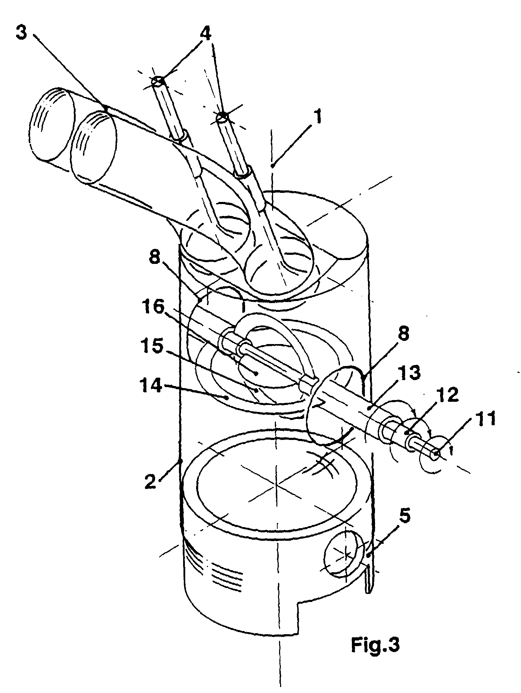

Die in Figur 3 dargestellte Ausführungsform unterscheidet sich von der Ausführungsform nach den Fig. 1 und 2 dadurch, daß anstelle des Meßflügels 7 mit Drehachse 6 mehrere Meßflügel 14, 15, 16 mit den jeweiligen Drehachsen 11, 12, 13, die voneinander unabhängig drehbar gelagert sind und deren Drehzahl einzeln gemessen wird, vorhanden sind.

Durch den Einsatz mehrerer Meßflügel 14, 15, 16 kann das Strömungsprofil der Wirbelströmung untersucht werden. Die so gewonnenen Informationen über die Strömungsstruktur können zur Interpretation der Mischungsvorgänge bei einströmenden Kraftstoff-Luftgemischen genutzt werden.

Da je nach der geometrischen Ausführung des zu untersuchenden strömungsführenden Bauteils beim Einströmen in das zylindrische Rohr der Strömung mit Drehachse senkrecht zur Zylinderachse auch Strömungskomponenten mit Drehachse parallel zur Zylinderachse überlagert sein können, ist der Winkel zwischen der Drehachse des Meßflügels 7 und der Zylinderachse 1 einstellbar. Zusätzlich ist der Meßflügel 7 hinsichtlich des Abstands zum strömungsführenden Bauteil in axialer Richtung des zylindrischen Rohres verschiebbar und die Meßflügelachse um die Zylinderachse drehbar. Die Variabilität der Meßflügelposition schafft die Möglichkeit, neben der Intensität eines beim Einströmen in das Zylinderrohr erzeugten Wirbels auch dessen genaue Ausrichtung zu ermitteln, die durch die maximale Flügeldrehzahl gekennzeichnet ist. So können in vorteilhafter Weise komplexere Strömungsformen, die nach Einführung der Mehrventiltechnologie in verstärktem Maße auftreten, untersucht werden.

Ein weiterer wichtiger Vorteil kann durch die Berücksichtigung der geometrischen Einflußparameter durch Nachbilden der exakten Zylindergeometrie des Hubkolbenmotors einschließlich der Ablenkung der Strömung am Kolben erreicht werden. Hierzu wird das zylindrische Rohr 2 durch den Kolben 5 eines Hubkolbenmotors oder eine Nachbildung in axialer Richtung in Strömungsrichtung gesehen hinter dem Meßflügel 7 bzw. den Meßflügeln 14, 15, 16 verschlossen. In Verbindung mit dem Austritt der Strömung durch die Öffnungen 8 der Zylinderwand, deren Mittelpunkt im wesentlichen mit der Drehachse 6 des Meßflügels 7 bzw. der Drehachsen 11, 12, 13 der Meßflügel 14, 15, 16 zusammenfällt, bzw. zusammenfallen, werden im stationären Meßbetrieb Rückwirkungen auf die Ausbildung der Wirbelströmung vermieden. Hierdurch wird die Übertragbarkeit der Meßergebnisse auf den Motorbetrieb sichergestellt.

Bei der Ausführungsform gemäß Fig. 2 verschließt der strömungsdurchlässige Kolben 9, der in Strömungsrichtung gesehen hinter dem Meßflügel 7 bzw. hinter den Meßflügeln angeordnet ist, das zylindrische Rohr 2 in axialer Richtung. Der Vorteil dieser Ausführungsform besteht darin, daß im stationären Betrieb des Meßverfahrens der durch den durchlässigen Kolben 9 entweichende Strömungsanteil im Motorbetrieb dem Anteil der in den Zylinder einströmenden Masse entspricht, der das beim Ansaugvorgang durch den abwärts bewegten Kolben hinzukommende Zylindervolumen füllt.

In vorteilhafter Weise ermöglicht die axiale Verschiebung der Position des in Strömungsrichtung gesehen hinter dem Meßflügel 7 bzw. den Meßflügeln angebrachten Verschlusses bzw. strömungdurchlässigen Kolbens 9 die Untersuchung des Einflusses der Kolbenstellung auf die Strömungsbewegung im Zylinder. Diese Vorgehensweise ist zur Klärung der detaillierten Vorgänge während der Ansaugphase, bei der sich infolge der Kolbenbewegung die Geometrie des Zylinderraums ständig ändert, von großer Bedeutung.

Um die für den Einströmvorgang in das zylindrische Bauteil 2 der Meßeinrichtung erforderliche Druckdifferenz zu erzeugen, wird der Druck im zylindrischen Bauteil 2 geringer als der Umgebungsdruck eingestellt. Diese Druckdifferenz kann entweder durch Absenkung des Drucks im zylindrischen Bauteil 2 oder durch Erhöhung des Drucks vor dem zu untersuchenden strömungsführenden Bauteil erzeugt werden.

In vorteilhafter Weise kann die Strömungsmessung bei stationärer Durchströmung durchgeführt werden. Der konstruktive Aufbau der Meßeinrichtung stellt hierbei die gute Übertragbarkeit der ermittelten Meßwerte auf den Motorbetrieb sicher.

In einer anderen vorteilhaften Betriebsweise kann die Meßeinrichtung instationär durchströmt werden, um dabei zusätzlich gasdynamische Effekte zu erfassen.

Es können auch mehrere gleichartige Einrichtungen zur Untersuchung der Strömungsbewegungen in zylindrischen Rohren kombiniert werden, so daß beispielsweise ein Vollmotorzylinderkopf als strömungsführendes Bauteil auf allen Zylindern gleichzeitig durchströmt wird.

## Patentansprüche

1. Einrichtung zur Untersuchung der Strömungsbewegung eines Strömungsmediums in einem zylindrischen Bauteil (2) einer Hubkolben-Brennkraftmaschine,wobei die Strömungsbewegung von einem in Strömungsrichtung gesehen vor dem zylindrischen Bauteil (2) befindlichen strömungsführenden System (3, 4) erzeugt wird, dadurch gekennzeichnet, daß in dem zylindrischen Bauteil (2) wenigstens ein Meßflügel (7) drehbar gelagert ist, der mit einer Welle (6) verbunden ist, deren Drehachse die Achse (1 ) des zylindrischen Bauteils (2) unter einem einstellbaren, von 0° verschiedenen Winkel schneidet, und daß die Welle (6) mit einer Einrichtung (20) zur Auswertung der Drehfrequenz des Meßflügels (7) zur Bestimmung eines oder mehrerer Parameter der Strömungsbewegung verbunden ist.

2. Einrichtung nach Anspruch 1, dadurch gekennzeichnet, daß das zylindrische Bauteil (2) in seiner axialen Richtung in Strömungsrichtung gesehen hinter dem Meßflügel (7) bzw. hinter den Meßflügeln (14, 15, 16) verschlossen ist und das in das zylindrische Bauteil (2) eintretende Strömungsmedium durch wenigstens eine Öffnung (8) in der Wandung des zylindrischen Bauteils (2) austreten kann, deren Mittelpunkt im wesentlichen mit der Drehachse (6) des Meßflügels (7) bzw. den Drehachsen (11, 12, 13) der Meßflügel (14, 15. 16) zusammenfällt bzw. zusammenfallen.

3. Einrichtung nach Anspruch 1, dadurch gekennzeichnet, daß das in das zylindrische Bauteil (2) eintretende Strömungsmedium durch eine in Strömungsrichtung gesehen hinter dem Meßflügel (7) bzw. hinter den Meßflügeln (14, 15, 16) angeordnete strömungsdurchlässige Wandung (9) ausströmen kann.

4. Einrichtung nach Anspruch 1, dadurch gekennzeichnet, daß die Achse (6) des Meßflügels (7) bzw. der Meßflügel (14, 15, 16) gegenüber dem strömungsführenden System (3, 4) in axialer Richtung des zylindrischen Bauteils (2) verschiebbar und um die Achse (1 ) des zylindrischen Bauteils (2) drehbar ist.

5. Einrichtung nach Anspruch 2, dadurch gekennzeichnet, daß das zylindrische Bauteil (2) in seiner axialen Richtung in Strömungsrichtung gesehen hinter dem Meßflügel (7) bzw. hinter den Meßflügeln (14, 15, 16) durch eine in der axialen Richtung des Bauteils (2) verschiebbare, strömungsundurchlässige Wandung (5) abgeschlossen ist.

6. Einrichtung nach Anspruch 3, dadurch gekennzeichnet, daß die in Strömungsrichtung gesehen hinter dem Meßflügel (7) bzw. hinter den Meßflügeln (14, 15, 16) angeordnete strömungsdurchlässige Wandung (9) in axialer Richtung des zylindrischen Bauteils (2) verschiebbar ist.

7. Einrichtung nach Anspruch 1, dadurch gekennzeichnet, daß der Meßflügel (7) bzw. die Meßflügel (14, 15) die Form eines Kreisringes hat bzw. haben.

8. Verfahren zum Betrieb einer Einrichtung zur Untersuchung der Strömungsbewegung in einem zylindrischen Bauteil entsprechend Anspruch 1, dadurch gekennzeichnet, daß das zylindrische Bauteil (2) stationär durchströmt wird.

9. Verfahren zum Betrieb einer Einrichtung zur Untersuchung der Strömungsbewegung in einem zylindrischen Bauteil entsprechend Anspruch 1, dadurch gekennzeichnet, daß daß zylindrische Bauteil (2) instationär durchströmt wird.

## Claims

1. An apparatus for investigating the flow motion of a flow medium within a cylindrical component (2) of a reciprocating internal combustion engine, wherein the flow motion is generated by a flow-guiding system (3, 4) located in front of the cylindrical component (2) when viewed in the direction of flow, characterised in that at least one hydrometric vane (7) is rotatably mounted in the cylindrical component (2), which vane is connected to a shaft (6), the axis of rotation of which intersects the axis (1) of the cylindrical component (2) at an adjustable angle which is other than 0°, and that the shaft (6) is connected to an apparatus (20) for evaluating the rotary frequency of the hydrometric vane (7) to determine one or more parameters of the flow motion.

2. An apparatus according to Claim 1, characterised in that the cylindrical component (2) is closed in its axial direction, when viewed in the direction of flow, after the hydrometric vane (7) or after the hydrometric vanes (14, 15, 16), and the flow medium entering the cylindrical component (2) can emerge through at least one opening (8) in the walls of the cylindrical component (2), the centre point of which substantially coincides with the axis of rotation (6) of the hydrometric vane (7) or the axes of rotation (11, 12, 13) of the hydrometric vanes (14, 15, 16).

3. An apparatus according to Claim 1, characterised in that the flow medium entering the cylindrical component (2) can flow out through a flow-permeable wall (9) located after the hydrometric vane (7) or after the hydrometric vanes (14, 15, 16), when viewed in the direction of flow.

4. An apparatus according to Claim 1, characterised in that the axis (6) of the hydrometric vane (7) or of the hydrometric vanes (14, 15, 16) is displaceable relative to the flow-guiding system (3, 4) in the axial direction of the cylindrical component (2) and is rotatable about the axis (1) of the cylindrical component (2).

5. An apparatus according to Claim 2, characterised in that the cylindrical component (2) is closed in its axial direction, when viewed in the direction of flow, after the hydrometric vane (7) or after the hydrometric vanes (14, 15, 16), by a wall (5) impermeable to the flow which is displaceable in the axial direction of the component (2).

6. An apparatus according to Claim 3, characterised in that the flow-permeable wall (9) which, when viewed in the direction of flow, is located after the hydrometric vane (7) or after the hydrometric vanes (14, 15, 16), is displaceable in the axial direction of the cylindrical component (2).

7. An apparatus according to Claim 1, characterised in that the hydrometric vane (7) or the hydrometric vanes (14, 15) is or are in the form of a circular ring.

8. A method for operating an apparatus for investigating the flow motion within a cylindrical component in accordance with Claim 1, characterised in that the flow passing through the cylindrical component (2) is a steady flow.

9. A method for operating an apparatus for investigating the flow motion within a cylindrical component in accordance with Claim 1, characterised in that the flow passing through the cylindrical component (2) is a non-steady flow.

## Revendications

1. Dispositif pour l'examen de l'écoulement d'un fluide dans une pièce cylindrique (2) d'un moteur alternatif à combustion interne, l'écoulement du fluide étant généré par un système (3, 4) guidant l'écoulement se trouvant devant la pièce cylindrique (2), vu dans le sens de l'écoulement, caractérisé en ce que, dans la pièce cylindrique (2), il est prévu au moins un moulinet hydrométrique (7) qui est monté en rotation et qui est assemblé avec un arbre (6) dont l'axe de rotation coupe l'axe (1) de la pièce cylindrique (2) selon un angle réglable, différent de 0°, et en ce que l'arbre (6) est assemblé avec un dispositif (20) d'analyse de la fréquence de rotation du moulinet hydrométrique (7) pour la détermination d'un ou de plusieurs paramètres de l'écoulement.

2. Dispositif selon la revendication 1, caractérisé en ce que la pièce cylindrique (2) est fermée dans son sens axial, vu dans le sens de l'écoulement, derrière le moulinet hydrométrique (7) respectivement derrière les moulinets hydrométriques (14, 15, 16) et en ce que le fluide pénétrant dans la pièce cylindrique (2) peut sortir par au moins une ouverture (8) dans la paroi de la pièce cylindrique (2) dont le centre coïncide en substance avec l'axe de rotation (6) du moulinet hydrométrique (7) respectivement les axes de rotation (11, 12, 13) des moulinets hydrométriques (14, 15, 16).

3. Dispositif selon la revendication 1, caractérisé en ce que le fluide pénétrant dans la pièce cylindrique (2) peut s'écouler à travers une paroi (9) perméable à l'écoulement et disposée, vu dans le sens de l'écoulement, derrière le moulinet hydrométrique (7) respectivement derrière les moulinets hydrométriques (14, 15, 16).

4. Dispositif selon la revendication 1, caractérisé en ce que l'axe (6) du moulinet hydrométrique (7) respectivement des moulinets hydrométriques (14, 15, 16) est mobile dans le sens axial de la pièce cylindrique (2) et pivote autour de l'axe (1) de la pièce cylindrique (2).

5. Dispositif selon la revendication 2, caractérisé en ce que la pièce cylindrique (2) est fermée dans son sens axial, vu dans le sens de l'écoulement, derrière le moulinet hydrométrique (7) respectivement derrière les moulinets hydrométriques (14, 15, 16), par une paroi (5) mobile dans le sens axial de la pièce (2) et imperméable à l'écoulement.

6. Dispositif selon la revendication 3, caractérisé en ce que la paroi (9) perméable à l'écoulement et disposée, vu dans le sens d'écoulement, derrière le moulinet hydrométrique (7) respectivement derrière les moulinets hydrométriques (14, 15, 16) est mobile dans le sens axial de la pièce cylindrique (2).

7. Dispositif selon la revendication 1, caractérisé en ce que le moulinet hydrométrique (7) respectivement les moulinets hydrométriques (14, 15) a (ou ont) la forme d'un anneau circulaire.

8. Procédé d'utilisation d'un dispositif pour l'examen de l'écoulement dans une pièce cylindrique selon la revendication 1, caractérisé en ce que la pièce cylindrique (2) est traversée de façon stationnaire.

9. Procédé d'utilisation d'un dispositif pour l'examen de l'écoulement dans une pièce cylindrique selon la revendication 1, caractérisé en ce que la pièce cylindrique (2) est traversée de façon non-stationnaire.
